## Europäisches Patentamt
## European Patent Office
## Office européen des brevets

(11) Numéro de publication: **0 123 628**
**B1**

(12)
# FASCICULE DE BREVET EUROPÉEN

(45) Date de publication du fascicule du brevet:
**02.09.87**

(51) Int. Cl.⁴: **G 02 B 27/64**

(21) Numéro de dépôt: **84400836.7**

(22) Date de dépôt: **25.04.84**

(54) **Dispositif de stabilisation d'image pour un périscope de sous-marin.**

(30) Priorité: **26.04.83 FR 8306860**

(43) Date de publication de la demande:
**31.10.84 Bulletin 84/44**

(45) Mention de la délivrance du brevet:
**02.09.87 Bulletin 87/36**

(84) Etats contractants désignés:
**AT BE CH DE FR GB IT LI LU NL SE**

(56) Documents cité:
**DE-C-977 534**
**FR-A-1 478 301**
**GB-A-953 420**
**US-A-2 523 577**
**US-A-3 261 260**

(73) Titulaire: **SOCIETE D'OPTIQUE, PRECISION ELECTRONIQUE ET MECANIQUE - SOPELEM, 102 rue Chaptal, F-92300 Levallois- Perret (FR)**

(72) Inventeur: **Moirez, Jacques, 4 avenue des Gobelins, F-75005 Paris (FR)**
Inventeur: **Ragain, Jacques, 31 avenue Raspail, F-95330 Domont (FR)**

(74) Mandataire: **Phélip, Bruno, c/o Cabinet Harlé & Phélip 21, rue de la Rochefoucauld, F-75009 Paris (FR)**

EP 0 123 628 B1

## Description

La présente invention se rapporte à un dispositif de stabilisation d'image pour un périscope de sous-marin. Ce dispositif s'applique à un périscope à voie optique, à bloc oculaire fixe ou mobile.

Un périscope de sous-marin se compose d'un tube ou mât qui est guidé dans des paliers solidaires de la structure du sous-marin. Il porte, à la partie supérieure, une tête d'observation comport ant un prisme déviateur qui est orientable en site et qui réfléchit la lumière vers un objectif de tête. Le faisceau lumineux sortant de l'objectif est véhiculé, à l'intérieur du tube, vers un bloc oculaire.

Le mât du périscope, lorsqu'il est déployé, est soumis à des efforts qui le font fléchir en écartant la tête de l'axe théorique défini par les paliers. La tête subit ainsi un mouvement de rotation qui provoque des déplacements de l'image du paysage par rapport à l'axe de visée (translations dans le plan de visée et dans le plan transversal et rotation).

On a stabilisé l'image dans le plan de réticule de tête en utilisant un gyroscope pour corriger l'orientation du prisme de la tête d'observation.

Pour stabiliser l'image dans le plan focal de l'oculaire malgré les déformations de mât on a prévu d'équiper les périscopes, conformément au brevet FR-A 1 478 301 par des systèmes afocaux qui sont montés entre la tête et le bloc oculaire. Toutefois les déformations du mât provoquent une occultation des pupilles.

Le périscope décrit par le FR-A 1 378 507 comporte, entre le prisme et l'oculaire, un tube porteur rigide contenant des lentilles et logé, par l'intermédiaire d'appuis, dans le mât.

L'invention a pour but de stabiliser l'image dans le plan focal de l'oculaire en évitant l'occultation des faisceaux pupillaires malgré les déformations du mât notamment celles qui se produisent entre les paliers.

La présente invention propose un périscope de sous-marin à stabilisation d'image comportant un mât périscopique guidé par deux paliers et portant une tête d'observation équipée d'un prisme déviateur susceptible de pivoter autour d'au moins un axe d'orientation de manière à réfléchir la lumière venant du paysage vers une optique montée à l'intérieur du mât et constituant un premier système afocal composé de deux objectifs, un objectif situé en arrière du prisme dévateur et un deuxième système afocal composé de deux objectifs monté à l'intérieur du mât au-dessous du premier système afocal, périscope qui est caractérisé en ce que le premier système afocal est porté par une poutre rigide montée à l'intérieur du mât par l'intermédiaire de deux rotules et en ce que ladite poutre est associée à au moins une autre poutre rigide de support du deuxième système afocal disposé au-dessous de la première poutre laquelle autre poutre est guidée et portée par l'intermédiaire de deux rotules sensiblement situées au niveau tant du palier supérieur que du palier inférieur.

Selon une caractéristique, le mât se compose d'un tube extérieur et d'un tube intérieur dans lequel se logent les rotules.

Selon une autre caractéristique, le système afocal de la partie rigide inférieure comporte un véhicule situé entre les objectifs de ce système.

L'invention va maintenant être décrite avec plus de détails en se référant à un mode de réalisation donné à titre d'exemple et représenté par les dessins annexés.

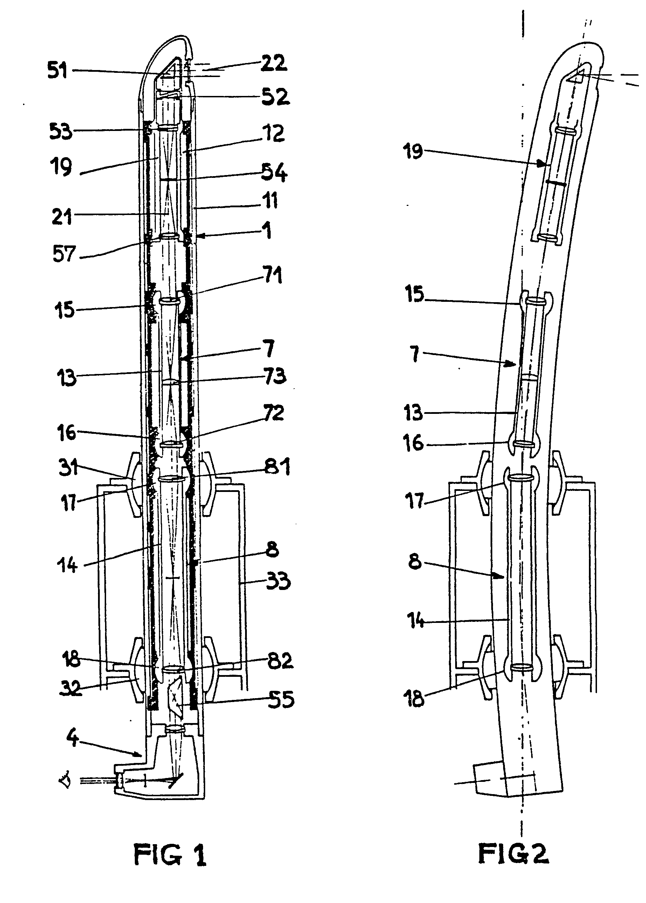

La figure 1 représente schémtiquement un périscope à bloc oculaire fixe équipé du dispositif de stabilisation de l'image conforme à l'invention.

La figure 2 représente le périscope avec une déformation volontairement amplifiée du mât.

Le périscope représenté par les dessins comprend un tube ou mât 1 dont l'axe longitudinal est repéré 21. Ce tube est guidé en translation et rotation de manière à être vertical par des paliers 31, 32, solidaires de la structure 33 du sous-marin.

Le tube 1 porte à la partie supérieure une tête d'observation qui est munie d'un prisme de tête à réflexion totale 51 pouvant pivoter autour d'au moins un axe d'orientation de manière a déplacer l'axe de visée 22 en site. Le prisme de tête 51 réfléchit la lumière venant du paysage à l'intérieur du tube.

En arrière du prisme de tête 51 est disposé l'objectif de tête 53 centré sur l'axe optique.

En arrière de l'objectif 53, le faisceau lumineux est focalisé sur un réticule de tête 54 centré sur l'axe optique.

Un bloc d'observation 4 disposé à la partie inférieure du périscope reprend le faisceau lumineux à la sortie du tube 1.

L'image est stabilisée sur le réticule de tête 54, en largeur par un déviateur 52 du type diasporamètre, en hauteur par action sur le prisme de pointage 51. L'image est stabilisée en rotation par un prisme 55 (de type Wollaston ou Péchan) tournant autour de l'axe optique.

Le mât se compose d'un tube extérieur 11 qui est guidé dans les paliers et d'un tube intérieur 12 logé à l'intérieur de ce tube. Le tube intérieur 12 est centré dans le tube extérieur 11 par l'intermédiaire de portées de centrage échelonnées le long du mât et il est lié verticalement au tube extérieur soit par sa partie supérieure soit par sa partie inférieure.

Le prisme 51, le déviateur 52, l'objectif 53, le réticule 54 et un élément de véhicule 57 sont montés dans une poutre 19 portée par l'extrémité supérieure du tube intérieur 12 de manière à être solidaire de celui-ci.

A l'intérieur du mât, au-dessous de l'objectif 53 est logée une poutre rigide 13, qui porte un système afocal 7. Cette poutre est guidée et portée par l'intermédiaire de deux rotules 15 et 16 se logeant dans le tube intérieur 12 du mât.

Au-dessous de la poutre 13 est disposée une seconde poutre rigide 14 qui porte un second système afocal 8. Cette poutre est guidée et portée par l'intermédiaire de deux rotules 17 et 18 se logeant dans le tube intérieur 12 du mât. Ce système afocal s'étend entre le palier supérieur 31 et le palier inférieur 32 et les rotules 17, 18 sont sensiblement situées au niveau des paliers.

Chaque poutre 13 ou 14 a une forme tubulaire permettant le logement d'un système afocal.

Chaque système afocal 7 ou 8 est composé de deux objectifs 71 et 72 ou 81 et 82 séparés de manière que le foyer image de l'objectif avant soit confondu avec le foyer objet de l'objectif arrière.

Dans le cas où le mât est guidé par trois paliers, le système afocal inférieur est constitué de deux objectifs 81 et 82 et d'un véhicule intermédiaire qui conjugue le foyer image de l'objectif avant 81 avec le foyer objet de l'objectif arrière 82.

Les rotules 16, 17 des deux poutres adjacentes sont sensiblement concentriques. Les pupilles de chacun des systèmes afocaux sont situées au niveau des rotules qui autorisent les rotations par rapport au tube 1.

Afin de ne pas provoquer de vignettage supplémentaire en bord de champ lors des flexions, le dispositif comporte des verres de champ tels que 73 dans certains plans images.

Le fonctionnement du dispositif est le suivant:

A la sortie de l'élément de véhicule 57 le faisceau est repris par les systèmes afocaux 7 et 8 montés sur les poutres rotulantes 13 et 14. En choisissant le positionnement relatif des systèmes afocaux, et les focales des objectifs de ces systèmes, il existe une solution permettant de stabiliser l'image dans le plan oculaire.

Il est bien entendu que l'on peut sans sortir du cadre de l'invention imaginer des variantes et des perfectionnements de détail et de même envisager l'emploi de moyens équivalents. Des soufflets pourraient être montés entre deux poutres adjacentes. La commande du prisme de tête pourrait être une gyrostabilisation pour stabiliser l'image sur le réticule de tête.

## Revendications

1. Périscope de sous-marin à stabilisation d'image comportant un mât périscopique (1) guidé par deux paliers (31, 32) et portant une tête d'observation équipée d'un prisme déviateur (51) susceptible de pivoter autour d'au moins un axe d'orientation de manière à réfléchir la lumière venant du paysage vers une optique (7) montée à l'intérieur du mât (1) et constituant un premier système afocal composé de deux objectifs (71, 72), un objectif (53) situé en arrière du prisme déviateur (51) et un deuxième système afocal (8) composé de deux objectifs (81, 82) monté à l'intérieur du mât (1) au-dessous du premier système afocal, caractérisé en ce que le premier système afocal (7) est porté par une poutre rigide (13) montée à l'intérieur du mât (1) par l'intermédiaire de deux rotules (15, 16) et en ce que ladite poutre (13) est associée à au moins une autre poutre rigide (14) de support du deuxième système afocal disposé au-dessous de la première poutre (15) laquelle autre poutre (14) est guidée et portée par l'intermédiaire de deux rotules (17, 18) sensiblement situées au niveau tant du palier supérieur (31) que du palier inférieur (32).

2. Périscope de sous-marin selon la revendication 1, caractérisé par le fait que le mât se compose d'un tube extérieur (11) et d'un tube intérieur (12) dans lequel se logent les rotules (15, 16, 17, 18).

3. Périscope selon la revendication 1 ou 2, caractérisé par le fait que le système afocal (8) de la poutre rigide inférieure (14) comporte un véhicule intermédiaire situé entre les objectifs (81, 82) de ce système.

4. Périscope selon la revendication 3, caractérisé par le fait que l'objectif de tête (53) est monté avec le prisme de tête (51) dans une poutre portée par le tube intérieur.

## Patentansprüche

1. Periskop mit Bildstabilisation für ein Unterwasserfahrzeug, enthaltend einen durch zwei Lagerungen (31, 32) geführten Periskopmast (1) mit einem Beobachtungskopf, der mit einem Umlenkprisma (51) ausgerüstet ist, das um wenigstens eine Orientierungsachse drehbar ist, derart, daß das aus der Umgegend zu einer Optik (7) gelangende Licht reflektiert wird, die im Innern des Mastes (1) montiert ist und ein aus zwei Objektiven (71, 72) bestehendes erstes afokales System bildet, ein vor dem Umlenkprisma (51) befindliches Objektiv (53) und ein aus zwei Objektiven (81, 82) bestehendes zweites afokales System (8), das im Innern des Mastes (1) unterhalb des ersten afokalen Systems montiert ist, dadurch gekennzeichnet, daß das erste afokale System (7) von einem starren Träger (13) getragen wird, der im Innern des Mastes (1) durch das Zwischenteil von zwei Kugelgelenken (15, 16) montiert ist, und daß der Träger (13) wenigstens einem weiteren starren Stützträger (14) des zweiten afokalen Systems zugeordnet ist, der unterhalb des ersten Trägers (13) angeordnet ist, welcher weitere Träger (14) durch das Zwischenteil von zwei Kugelgelenken (17, 18) geführt und getragen wird, die praktisch auf dem Niveau sowohl der oberen Lagerung (31) als auch der unteren Lagerung (32) angeordnet sind.

2. Periskop nach Anspruch 1, dadurch gekennzeichnet, daß sich der Mast aus einem äußeren Rohr (11) und aus einem inneren Rohr (12) zusammensetzt, in welch letzterem die Kugelgelenke (15, 16, 17, 18) angeordnet sind.

3. Periskop nach Anspruch 1 oder 2, dadurch gekennzeichnet, daß das afokale System (8) des unteren starren Trägers (14) ein Zwischenbauteil aufweist, das zwischen den Objektiven (81, 82) dieses Systems angeordnet ist.

4. Periskop nach Anspruch 3, dadurch gekennzeichnet, daß das Kopfobjektiv (53) mit dem Kopfprisma (51) in einem Träger montiert ist, der von dem inneren Rohr getragen wird.

## Claims

1. Submarine periscope with image stabilization, comprising a periscopic mast (1) guided by two bearings (31, 32) and carrying a viewing head equipped with a deviating prism (51) capable of pivoting about at least one axis of orientation, so as to reflect the light coming from outside towards an optical system (7) mounted inside the mast (1) and forming a first afocal system composed of two lenses (71, 72), a lens (53) located at the rear of the deviating prism (51), and a second afocal system (8) composed of two lenses (81, 82) and mounted inside the mast (1) below the first afocal system, characterized in that the first afocal system (7) is carried by a rigid beam (13) mounted inside the mast (1) by means of two ball-and-socket joints (15, 16), and in that the said beam (13) is associated with at least one other rigid beam (14) intended for supporting the second afocal system and arranged underneath the first beam (13), which other beam (14) is guided and carried by means of two ball-and-socket joints (17, 18) located substantially in line with the upper bearing (31) and the lower bearing (32).

2. Submarine periscope according to Claim 1, characterized in that the mast is composed of an outer tube (11) and an inner tube (12), in which the ball-and-socket joints (15, 16, 17, 18) are accommodated.

3. Periscope according to Claim 1 or 2, characterized in that the afocal system (8) of the lower rigid beam (14) has an intermediate means located between the lenses (81, 82) of this system.

4. Periscope according to Claim 3, characterized in that the head lens (53) is mounted, together with the head prism (51), in a beam carried by the inner tube.

FIG 1

FIG2